# EUROPÄISCHE PATENTSCHRIFT

(11) **EP 1 427 566 B1**
(45) Veröffentlichungstag und Bekanntmachung des Hinweises auf die Patenterteilung: **24.09.2008**
(21) Anmeldenummer: 02754440.2
(22) Anmeldetag: 25.07.2002
(51) Int. Cl.: G05B 19/414

(54) **ANTRIEBSEINHEIT UND VERFAHREN ZUR STEUERUNG ODER REGELUNG INSBESONDERE VON WERKZEUGMASCHINEN**
DRIVE UNIT AND METHOD FOR CONTROL OR REGULATION OF IN PARTICULAR MACHINE TOOLS
UNITE D'ENTRAINEMENT ET PROCEDE POUR COMMANDER OU REGULER EN PARTICULIER DES MACHINES-OUTILS

(30) Priorität: 02.08.2001 DE 10137910
(43) Veröffentlichungstag der Anmeldung: 16.06.2004
(73) Patentinhaber: SIEMENS AKTIENGESELLSCHAFT, 80333 München (DE)
(72) Erfinder: DONAT, Albrecht, 91462 Dachsbach (DE); FLORSCHÜTZ, Rolf, 91091 Grossenseebach (DE); HEINEMANN, Gerhard, 91058 Erlangen (DE); STEINIGEWEG, Rolf-Jürgen, 91074 Herzogenaurach (DE)
(86) Internationale Anmeldenummer: PCT/DE2002/002739
(87) Internationale Veröffentlichungsnummer: WO 2003/013784

(56) Entgegenhaltungen:
- DE-A- 19 624 929
- US-A- 4 459 655
- US-A- 4 841 450
- KIRK R B: "PARALLEL PROCESSING IN CONTROL APPLICATIONS" I & CS - INDUSTRIAL AND PROCESS CONTROL MAGAZINE, CHILTON COMPANY. RADNOR, PENNSYLVANIA, US, Bd. 63, Nr. 9, 1. September 1990 (1990-09-01), Seiten 41-45, XP000167890 ISSN: 1074-2328

## Beschreibung

Die Erfindung bezieht sich auf eine Antriebseinheit zur Steuerung oder Regelung, insbesondere von Werkzeugmaschinen, Robotern oder dgl. sowie auf ein Verfahren zur Kopplung von Komponenten einer solchen Antriebseinheit.

Der Ubergang von ungeregelter Antriebstechnik mit Motoren direkt am Stromversorgungsnetz zur geregelten Antriebstechnik mit von Umrichtern gespeisten Motoren bringt viele Vorteile fur den Prozess, der diese Antriebstechnik nutzt. Daher hält der Trend, ungeregelte Antriebe durch geregelte Antriebe zu ersetzen, seit vielen Jahren an und ermöglicht es im Maschinenbau neue Konzepte zu realisieren, die zu einer Verbesserung der Prozesse und damit der Produktqualität aber auch der Produktivität der geregelten Maschine führen. Durch die Vielfalt der Anwendungen werden vom Maschinenbau unterschiedlichste Antriebslösungen benötigt. Diese werden derzeit durch spezialisierte Produkte oder durch Baukastensysteme mit diversen unterschiedlichen Schnittstellen zwischen den Bausteinen realisiert. Die zentralen Bestandteile eines heutigen Antriebs sind in einer Antriebseinheit so miteinander verbunden, dass es nicht möglich ist, sie an unterschiedliche Anforderungen anzupassen. Darüber hinaus können Innovationen am Bauelementemarkt nicht ohne weiteres in eine Antriebseinheit implementiert werden ohne größere Eingriffe in den unterschiedlichsten Funktionen und vor allem in den unterschiedlichen Schnittstellen zwischen den Bausteinen vorzunehmen.

Auch dann, wenn sich die Anforderungen an eine der Kernfunktionen der Antriebstechnik, d.h. an die Leistung, Regelqualität oder die Bauform bedingt durch Innovationen im Prozess des Anwenders ändern, ist der Antrieb nicht mehr optimal ausgelegt und bringt Nachteile hinsichtlich seiner technischen Eigenschaften und/oder der Kosten mit sich.

Die Patentschrift US 4 459 655 offenbart ein Kontrollsystem, das mehrere Slavemodule, die jeweils eine spezifische Kontrollfunktion ausüben und ein Mastermodul, welches die Slavemodule steuert. Die Module sind dabei mit einem Konversationsbus und einem Masterbus untereinander verbunden.

Heutige Antriebe realisieren eine Vielzahl von Funktionen wie "Antriebsgrößen stellen", (z.B. Spannung und Frequenz stellen oder binäre Ausgänge setzen), "Antriebsenergie wandeln" (z.B. Strom in Drehmoment umwandeln), "Antriebsgrößen messen" (z.B. Strom messen, Position messen, Beschleunigung messen, Spannung messen), "Antriebsgrößen regeln" (z.B. Drehzahl regeln, Strom regeln, Druck regeln) und "Antriebsgrößen überwachen" (z.B. Motortemperatur, Erdströme, Positionen). Eine weitere Funktion realisiert schließlich die Kommunikation zur überlagerten Steuerung und zur Bedieneinheit. Zu dieser Funktion gehören z.B. die Übernahme von Geschwindigkeitssollwerten, das Melden von Drehzahlen und Alarmen und das Einstellen der Regler. Die genannten Funktionen werden nach dem Stand der Technik auf unterschiedliche Weise und über unterschiedliche Schnittstellen in einer Antriebseinheit realisiert, die demzufolge mit den genannten Nachteilen behaftet ist.

Aufgabe der Erfindung ist es deshalb, eine Antriebseinheit zu schaffen, die sich leicht an unterschiedliche Anforderungen anpassen lässt.

Diese Aufgabe wird gelöst durch eine Antriebseinheit zur Steuerung oder Regelung, insbesondere von Werkzeugmaschinen, Robotern oder dergleichen, mit einer Vielzahl von Funktionen, wobei die Antriebseinheit aus typisierten Komponenten besteht, wobei jedem Komponente-Typ komponentenspezifische Funktionen zugeordnet sind, wobei den Komponenten jeweils ein einheitliches Kommunikationsmodul als Schnittstelle zugeordnet ist, wobei mindestens eine Komponente den übrigen Komponenten hierarchisch übergeordnet ist, wobei jedem Komponenten-Typ ein spezifisches Protokoll zugeordnet ist, wobei alle untergeordneten Komponenten-Typen mit der übergeordneten Komponente über ein typspezifisches Protokoll kommunizieren, wobei das typspezifische Protokoll jeder untergeordneten Komponente der übergeordneten Komponente beim Einschalten der Antriebseinheit mitgeteilt wird. Damit ist es möglich, falls sich einzelne Funktionen oder Bauteile von Komponenten ändern, diese Änderungen in der jeweiligen Komponente zu realisieren, ohne dass Eingriffe in anderen Komponenten vorgenommen werden müssen.

Weiterhin ist mindestens eine Komponente den übrigen Komponenten hierarchisch übergeordnet, wobei alle untergeordneten Komponenten mit der übergeordneten Komponente über ihre Schnittstelle kommunizieren. Die Hierarchisch übergeordnete Komponente übernimmt hier die Aufgabe einer sogenannten "zentralen Intelligenz", d.h. sie steuert die untergeordneten Komponenten und koordiniert die von diesen Komponenten gelieferten physikalischen Größen zur Steuerung des Prozesses, also beispielsweise einer Werkzeugmaschine oder eines Roboters. Die Schnittstellen können dabei über logische Punkt zu Punktverbindungen, aber auch über ein Bussystem miteinander verbunden sein.

Ferner wird die Aufgabe gelöst durch ein Verfahren zur Steuerung oder Regelung, insbesondere von Werkzeugmaschinen, Robotern oder dergleichen, mit einer Antriebseinheit, der eine Vielzahl von Funktionen zugeordnet ist, wobei die Antriebseinheit aus typisierten Komponenten besteht, wobei jedem Komponenten-Typ komponentenspezifische Funktionen zugeordnet sind, wobei den Komponenten jeweils ein einheitliches Kommunikationsmodul als Schnittstelle zugeordnet ist, wobei mindestens eine Komponente den übrigen Komponenten hierarchisch übergeordnet ist, wobei jedem Komponenten-Typ ein spezifisches Protokoll zugeordnet ist, wobei alle untergeordneten Komponenten-Typen mit der übergeordneten Komponente über ein typspezifisches Protokoll kommunizieren, wobei das typspezifische Protokoll jeder untergeordneten Komponente der übergeordneten Komponente beim Einschalten der Antriebseinheit mitgeteilt wird

Das typspezifische Protokoll jeder untergeordneten Komponente wird der übergeordneten Komponente beim Einschalten der Antriebseinheit mitgeteilt, so dass künftig die übergeordnete Komponente mit dem jeweils untergeordneten Komponententyp nur noch über dieses typspezifische Protokoll kommuniziert.

Nach einer vorteilhaften Ausbildung der Erfindung sind die Komponententypen durch ihre jeweiligen physikalischen Größen, wie z.B. Strom, Spannung, Leistung und Temperatur beschrieben und werden der übergeordneten Komponente durch ein vom Komponententyp unabhängiges Protokoll mitgeteilt. Durch die Beschreibung mittels der physikalischen Größen ist eine unproblematische Kommunikation möglich, insbesondere müssen bei einem Wechsel der physikalischen Größen bzw. der Beschreibung der physikalischen Größen an der übergeordneten Komponente keine Änderungen vorgenommen werden.

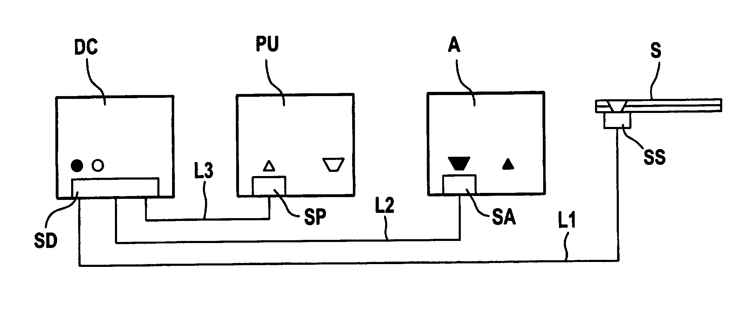

Ein Ausführungsbeispiel der Erfindung wird im folgenden anhand der Zeichnung näher beschrieben.

Die einzige Figur zeigt eine Antriebseinheit bestehend aus vier Komponenten, nämlich der zentralen Antriebs-Steuereinheit DC (Drive Controler), der Leistungs-Komponente PU (Power Unit) sowie der Aktor-Komponente A, wobei der Aktor A in der Regel ein Elektromotor sein wird, es könnte aber beispielsweise auch ein pneumatischer Antrieb sein. Die vierte Komponente ist der Sensor S. Die Komponenten DC, PU, A, S der Antriebseinheit verfügen jeweils über eine eigene Schnittstelle SD, SP, SA, SS die über Schnittstellenleitungen L1 bis L3 miteinander verbunden sind. Die Schnittstellenleitungen L1 bis L3 können serielle oder Bussysteme sein, es können aber auch Lichtwellenleiter verwendet werden.

Die geometrischen Figuren, wie Kreis, Dreieck oder Trapez symbolisieren, ohne Anspruch auf Vollständigkeit, verschiedene Funktionen, die die jeweilige Antriebskomponente ausführt. Der ausgefüllte Kreis der zentralen Steuereinheit DC symbolisiert z.B. die Funktion "Drehzahl regeln", während der nicht ausgefüllte Kreis die Funktion "Strom regeln" symbolisiert. Das Dreieck in der Leistungskomponente PU symbolisiert beispielsweise die Funktion "Spannung stellen", während das Trapez die Funktion "Strom messen" symbolisiert. Bei der Aktor-Komponente A symbolisiert das ausgefüllte Trapez die Funktion "Drehzahl messen" und das ausgefüllte Dreieck die Funktion "Energie wandeln", d.h. die Umsetzung des Stromes in Drehmoment. Das Trapez bei der Sensor-Komponente S symbolisiert die Funktion "Weg messen".

Wie erwähnt sind die dargestellten Funktionen der einzelnen Komponenten DC, PU, A, S nicht abschließend aufgezählt. Weitere Funktionen des Aktuators sind z.B. "Motor überwachen" und "-schützen", sowie die Kommunikation mit der zentralen Steuerkomponente DC über die zugeordnete Schnittstelle SA. Die Funktionen des oder der Sensoren S sind das Messen der physikalischen Größen, also z.B. das Messen von Strecken, Winkelgrößen, Temperatur, Druck, etc., aber auch das Überwachen des Sensors S selbst sowie die Kommunikation mit der zentralen Steuerkomponente über die Schnittstelle SS.

Weitere Funktionen der Leistungseinheit PU sind "sich selbst überwachen und schützen", sowie ebenfalls die Kommunikation mit der zentralen Steuerkomponente DC über die Schnittstelle SP.

Die Funktionen der zentralen Steuerkomponente DC, die in der Regel über eine zentrale Prozessoreinheit (CPU) verfügt, sind die Momenten- und Drehzahlregelung, die Systemdiagnose und die Kommunikation mit der übergeordneten Automatisierungsebene (hier nicht dargestellt).

Alle Komponenten sind über gleiche Schnittstellen SS, SA, SP mit der zentralen Steuerkomponente DC verbunden. Dies bedeutet, dass die über die Schnittstellen SP, SA und SS von den untergeordneten Komponenten PU, A und S gelieferten Informationen nicht unterschiedlich kodiert sind, so dass die übergeordnete zentrale Steuerkomponente DC nicht die unterschiedlichen Kodierungen kennen und ggf. umrechnen muss, sondern sie kann von den untergeordneten Komponenten erwarten, dass wenn diese eine Stromgröße liefern, diese auch tatsächlich als physikalischer Stromwert zur Verfügung gestellt wird. Ein Strom von 0,5 Ampere Stärke wird also beispielsweise in Flieskomma-Darstellung als 0,5 Ampere dargestellt und nicht etwa beispielsweise in einem binären hexadezimalen System zur Verfügung gestellt.

Die Physik der Schnittstellen ermöglicht die Verteilung der Komponenten über größere Entfernungen. Außer durch logische Punkt- zu Punktverbindungen können die Schnittstellen auch in Form einer Busstruktur verbunden werden, wobei auch unterschiedliche Komponententypen (z.B. Stellglieder, Sensoren) an einem Bussegment betreibbar sind. Die Kommunikation über eine jeweilige Schnittstelle SP, SA und SS wird durch die Funktion der Komponente festgelegt. Jede Komponente verfügt über ein eigenes Datenverarbeitungsmodul (eigene Intelligenz) die die Kommunikation der auf der Komponente realisierten Funktionen mit der übergeordneten zentralen Steuerkomponente DC ermöglicht.

Insgesamt ist die Zuordnung der Antriebsfunktionen zu den Antriebskomponenten in der beschriebenen Antriebseinheit so gewählt, dass sich jede einzelne Komponente einzeln innovieren lässt. So können beispielsweise neue Bauteile in den einzelnen Komponenten eingebaut werden oder die Funktionen einzelner Komponenten lassen sich an neue Anforderungen der Maschinenbauer anpassen, ohne dass dadurch Eingriffe in den anderen Komponenten vorgenommen werden müssten. Dies wird dadurch erreicht, dass die Schnittstellen unverändert bleiben.

Das Zusammenspiel der einzelnen Komponenten DC, PU, A und S wird so realisiert, dass beim Einschalten des Antriebs jede Komponente über ihr Datenverarbeitungsmodul den Typ der Komponente zur zentralen Steuerkomponente DC überträgt. Die zentrale Steuerkomponente DC kommuniziert danach mit dieser Komponente nur noch über das für diese Komponente festgelegte Protokoll. Die Werte der über die Schnittstellen SP, SA und SS an die Schnittstelle SD der zentralen Steuerkomponente DC übermittelten Größen sind von der Ausführungsform, d.h. vom Komponententyp abhängig. Sie werden aber der zentralen Steuerkomponente DC durch ein von der Komponentenausführung unabhängiges Protokoll mitgeteilt. Über die eindeutige Definition der physikalischen Größen einer Komponente existiert keine Abhängigkeit von etwaigen Softwareständen und Komponentenausführungsformen.

## Patentansprüche

1. Antriebseinheit zur Steuerung oder Regelung, insbesondere von Werkzeugmaschinen, Robotern oder dergleichen, mit einer Vielzahl von Funktionen, wobei die Antriebseinheit aus typisierten Komponenten (DC, PU, A, S) besteht, wobei jedem Komponente-Typ (DC,PU,A,S) komponentenspezifische Funktionen zugeordnet sind, wobei den Komponenten (DC,PU,A,S) jeweils ein einheitliches Kommunikationsmodul als Schnittstelle (SD,SP, SA,SS) zugeordnet ist, wobei mindestens eine Komponente (DC) den übrigen Komponenten (PU, A,S) hierarchisch übergeordnet ist, **dadurch gekennzeichnet, dass** jedem Komponenten-Typ ein spezifisches Protokoll zugeordnet ist, wobei alle untergeordneten Komponenten-Typen (PU,A,S) mit der übergeordneten Komponente (DC) über ein typspezifisches Protokoll kommunizieren, wobei das typspezifische Protokoll jeder untergeordneten Komponente (PU,A,S) der übergeordneten Komponente (DC) beim Einschalten der Antriebseinheit mitgeteilt wird.

2. Antriebseinheit nach einem der vorstehenden Ansprüche, **dadurch gekennzeichnet, dass** die Schnittstellen (SD,SP,SA,SS) über logische Punkt zu Punkt Verbindungen verbunden sind.

3. Antriebseinheit nach einem der vorstehenden Ansprüche, **dadurch gekennzeichnet, dass** die Schnittstellen (SD,SP,SA,SS) über ein Bussystem verbunden sind.

4. Verfahren zur Steuerung oder Regelung, insbesondere von Werkzeugmaschinen, Robotern oder dergleichen, mit einer Antriebseinheit, der eine Vielzahl von Funktionen zugeordnet ist, wobei die Antriebseinheit aus typisierten Komponenten (DC,PU,A,S) besteht, wobei jedem Komponenten-Typ (DC,PU,A,S) komponentenspezifische Funktionen zugeordnet sind, wobei den Komponenten (DC,PU,A,S) jeweils ein einheitliches Kommunikationsmodul als Schnittstelle (SD,SP,SA,SS) zugeordnet ist, wobei mindestens eine Komponente (DC) den übrigen Komponenten (PU, A,S) hierarchisch übergeordnet ist, **dadurch gekennzeichnet, dass** jedem Komponenten-Typ ein spezifisches Protokoll zugeordnet ist, wobei alle untergeordneten Komponenten-Typen (PU,A,S) mit der übergeordneten Komponente (DC) über ein typspezifisches Protokoll kommunizieren, wobei das typspezifische Protokoll jeder untergeordneten Komponente (PU,A,S) der übergeordneten Komponente (DC) beim Einschalten der Antriebseinheit mitgeteilt wird.

5. Verfahren nach einem der Anspruch 4, **dadurch gekennzeichnet, dass** jeder Komponenten-Typ (PU,A,S) durch seine physikalischen Größen beschrieben ist, die der übergeordneten Komponente (DC) durch ein vom Komponenten-Typ unabhängiges Protokoll mitgeteilt wird.

## Claims

1. Drive unit for controlling or regulating, in particular machine tools, robots or the like, with a plurality of functions, the drive unit consisting of standardised components (DC, PU, A, S), component-specific functions being assigned to each component type (DC, PU, A, S), a uniform communication module being associated with each of the components (DC, PU, A, S) and forming an interface (SD, SP, SA, SS), at least one component (DC) being hierarchically superior to the remaining components (PU, A, S), **characterised in that** a specific protocol is associated with each component type, all subordinate component types (PU, A, S) communicating with the subordinate component (DC) via a type-specific protocol, the type-specific protocol of each subordinate component (PU, A, S) being indicated to the superior component (DC) when the drive unit is switched on.

2. Drive unit according to one of the preceding claims, **characterised in that** the interfaces (SD, SP, SA, SS) are connected by logical point-to-point connections.

3. Drive unit according to one of the preceding claims, **characterised in that** the interfaces (SD, SP, SA, SS) are connected by a bus system.

4. Method for controlling or regulating, in particular machine tools, robots and the like, with a drive unit to which a plurality of functions are assigned, the drive unit consisting of standardised components (DC, PU, A, S), component-specific functions being assigned to each component type (DC, PU, A, S), a uniform communication module being associated with each of the components (DC, PU, A, S) and forming an interface (SD, SP, SA, SS), at least one component (DC) being hierarchically superior to the remaining components (PU, A, S), **characterised in that** a specific protocol is associated with each component type, all subordinate component types (PU, A, S) communicating with the subordinate component (DC) via a type-specific protocol, the type-specific protocol of each subordinate component (PU, A, S) being indicated to the superior component (DC) when the drive unit is switched on.

5. Method according to claim 4, **characterised in that** each component type (PU, A, S) is described by its physical parameters which are indicated to the superior component (DC) via a protocol that is independent of the component type.

## Revendications

1. Unité d'entraînement pour commander ou réguler notamment des machines-outils, des robots ou analogues ayant une pluralité de fonctions, l'unité d'entraînement étant constituée de composants (DC, PU, A, S) typés, des fonctions spécifiques aux composants étant affectées à chaque type de composant (DC, PU, A, S), un module de communication unitaire étant affecté en tant qu'interface (SD, SP, SA, SS) aux composants (DC, PU, A, S), au moins l'un des composants (DC) étant supérieur hiérarchiquement aux autres composants (PU, A, S), **caractérisée en ce qu'**à chaque type de composant est affecté un protocole spécifique, tous les types de composants (PU, A, S) subordonnés communiquant avec le composant (DC) supérieur hiérarchiquement par un protocole spécifique au type, le protocole spécifique au type de chaque composant (PU, A, S) subordonné étant communiqué au composant (DC) supérieur hiérarchiquement lors de la mise en route de l'unité d'entraînement.

2. Unité d'entraînement suivant l'une des revendications précédentes, **caractérisée en ce que** les interfaces (SD, SP, SA, SS) sont reliées par des liaisons logiques de point à point.

3. Unité d'entraînement suivant l'une des revendications précédentes, **caractérisée en ce que** les interfaces (SD, SP, SA, SS) sont reliées par un système de bus.

4. Procédé de commande ou de régulation, notamment de machines-outils, de robots ou analogues, comprenant une unité d'entraînement à laquelle est affectée une pluralité de fonctions, l'unité d'entraînement étant constituée de composants ( DC, PU, A, S ) typés, des fonctions spécifiques aux composants étant affectées à chaque type de composant ( DC, PU, A, S ), un module de communication unitaire étant affecté en tant qu'interface ( SD, SP, SA, SS ) aux composants ( DC, PU, A, S ), au moins l'un des composants ( DC ) étant supérieur hiérarchiquement aux autres composants ( PU, A, S ), **caractérisé en ce que** l'on affecte à chaque type de composant un protocole spécifique, tous les types ( PU, A, S ) subordonnés communiquant avec le composant ( DC ) supérieur hiérarchiquement par un protocole spécifique au type, le protocole spécifique au type de chaque composant ( PU, A, S ) subordonné étant communiqué au composant ( DC ) supérieur hiérarchiquement lors de la mise en route de l'unité d'entraînement.

5. Procédé suivant la revendication 4, **caractérisé en ce que** chaque type ( PU, A, S ) de composant est décrit par ses grandeurs physiques qui sont communiquées au composant ( DC ) supérieur hiérarchiquement par un protocole indépendant du type de composant.
